(19) Europäisches Patentamt
European Patent Office
Office européen des brevets

(11) **EP 3 000 676 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
**B60T 17/00** *(2006.01)* **B01D 53/26** *(2006.01)*

(21) Anmeldenummer: **15002363.8**

(22) Anmeldetag: **07.08.2015**

(54) **VERFAHREN ZUM BETRIEB EINES DRUCKLUFTSYSTEMS EINES FAHRZEUGS**

METHOD FOR OPERATING A COMPRESSED AIR SYSTEM OF A VEHICLE

PROCEDE DE FONCTIONNEMENT D'UN SYSTEME D'AIR COMPRIME D'UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2014 DE 102014014274**

(43) Veröffentlichungstag der Anmeldung:
**30.03.2016 Patentblatt 2016/13**

(73) Patentinhaber: **WABCO GmbH**
**30453 Hannover (DE)**

(72) Erfinder: **Pendzich, Kevin**
**30161 Hannover (DE)**

(74) Vertreter: **Lauerwald, Jörg**
**Wabco GmbH**
**Am Lindener Hafen 21**
**30453 Hannover (DE)**

(56) Entgegenhaltungen:
**EP-A1- 0 199 948** **EP-A1- 2 123 343**
**EP-A1- 2 407 231** **EP-A2- 1 980 312**
**DE-A1-102010 018 949** **DE-B3-102006 019 865**
**FR-A1- 2 537 013** **US-A1- 2005 150 377**

**Beschreibung**

Die Erfindung betrifft ein Verfahren zum Betrieb eines Druckluftsystems eines Fahrzeugs, mit einer elektronisch gesteuerten Lufttrocknungseinrichtung, welche wenigstens zwei Trocknungskartuschen aufweist, die im gegenseitigen Wechsel oder unabhängig voneinander in einem Förderbetrieb zur Trocknung von mittels eines Kompressors erzeugter Druckluft zur Versorgung des Druckluftsystems und in einem Regenerationsbetrieb zur Beseitigung von in den Trocknungskartuschen sich ansammelnder Feuchtigkeit betrieben werden, wobei ständig der Feuchtigkeitsgehalt der Trocknungskartuschen erfasst oder berechnet wird.

Druckluftsysteme für Fahrzeuge, insbesondere für Nutzfahrzeuge, arbeiten mit einem Kompressor, der aus der Atmosphäre angesaugte Luft verdichtet und bedarfsweise verschiedenen Einrichtungen des Fahrzeugs, wie pneumatischen Bremsanlagen, Luftfederungseinrichtungen und Nebenaggregaten, zur Verfügung stellt. Da die aus der Umgebung vom Kompressor angesaugte Luft im Allgemeinen mit Feuchtigkeit angereichert ist, umfassen solche Systeme zur Entfeuchtung der erzeugten Druckluft meistens eine Lufttrocknungseinrichtung mit einer durch Adsorption und Kondensation beim Durchströmen der Luft Feuchtigkeit aufnehmenden Trocknungskartusche. Dies ist erforderlich, um Beschädigungen und Funktionsbeeinträchtigungen durch Korrosion oder bei Frost durch Vereisen von Komponenten zu verhindern.

Um das sich in einem Trocknungsmittel beziehungsweise Trocknungsgranulat der Kartusche ansammelnde Kondensat zu entfernen, wird von Zeit zu Zeit bei einem Regenerationsvorgang trockene Luft aus einem Druckluftbehälter des Druckluftsystems und/oder Druckluft vom Kompressor in umgekehrter Richtung durch die Lufttrocknereinrichtung geleitet und dann über ein Entlüftungsventil in die Umgebung abgegeben. Die durch die Lufttrocknereinrichtung geführte trockene Luft nimmt dabei Feuchtigkeit auf und trocknet so das Trocknungsmittel der Kartusche. Allerdings kann während dieser Regenerationsphasen aufgrund des unterbrochenen Förderbetriebs keine Druckluft zu Versorgung der Verbraucher erzeugt werden. Bei einem hohen Druckluftverbrauch der angeschlossenen Verbraucher reicht die verfügbare Druckluft zudem nicht immer für eine ausreichende Regeneration der Kartusche aus.

Bereits bekannt sind Druckluftsysteme mit Lufttrocknungseinrichtungen, welche wenigstens zwei Trocknungskartuschen aufweisen. Bei diesen sogenannten Zweikammer-Lufttrocknern, kann jeweils eine Trocknungskartusche im Förderbetrieb die vom Kompressor erzeugte Druckluft entfeuchten, während sich die andere Trocknungskartusche im Regenrationsbetrieb befindet. Die Regelung und Umschaltung der Luftförderrichtung durch die Kartuschen kann mittels einer Ventileinrichtung erfolgen, welche ebenso wie der Kompressor von einer elektronischen Steuerungseinrichtung angesteuert wird. Unerwünschte Unterbrechungen in der Druckluftaufbereitung können durch solche Systeme weitgehend vermieden werden. Allerdings kann bei langen Förderphasen, die bei Neubefüllungen oder Erstbefüllungen nach einem Neustart bis zur Erreichung eines Abschaltdrucks regelmäßig vorkommen, oder bei Spezialanwendungen mit hohem Druckluftverbrauch, nicht jederzeit eine Umschaltung zwischen den Kartuschen erfolgen. Dies führt zu einer relativ hohen Wasserlast in wenigstens einer der betreffenden Kartuschen und einer entsprechend hohen Luftfeuchtigkeit im Druckluftsystem. Wie die Praxis gezeigt hat, reduziert eine anschließende gleichmäßige Nutzung und Regeneration beider Kartuschen, wie sie bei herkömmlichen Steuerungen erfolgt, den Feuchtigkeitsgehalt insbesondere der höher belasteten Kartusche nur sehr langsam und unzureichend.

Die DE 35 33 893 C2 beschreibt eine Zweikammer-Lufttrocknungseinrichtung, bei der zwei Trocknungskartuschen während Förder- und Regenerationsphasen parallel zueinander betrieben werden. Ein nach einem vorgegebenen Zeittakt schaltbarer Ventilmechanismus führt im Wechsel dieses Zeittakts die von einem Kompressor kommende feuchte Druckluft in eine der Trocknungskartuschen ein und leitet von der jeweils anderen Trocknungskartusche zur Regeneration verwendete Druckluft ab.

Außerdem ist aus der DE 10 2010 031 306 A1 ist eine Lufttrocknungseinrichtung eines Druckluftsystems mit zwei Trocknungskartuschen bekannt, bei der ein Regenerationsbetrieb einer Trocknungskartusche unabhängig von einem Förderbetrieb einer anderen Trocknungskartusche steuerbar ist. Strömungsverbindungen von einem Kompressor über eine aktuell im Förderbetrieb betriebene Kartusche zu den Verbrauchern und von einer Druckluftquelle des Druckluftsystems über eine aktuell im Regenerationsbetrieb betriebene Kartusche zu einem Entlüftungsanschluss sind voneinander unabhängig steuerbar. Der jeweilige Regenerationsbetrieb kann bedarfsweise unterbrochen, abgekürzt oder bevorzugt in Betriebsphasen mit niedrigem Druckluftverbrauch durchgeführt werden, um temporär bei hohem Verbrauch den gesamten Druckluftstrom des Kompressors dem System zur Verfügung zu stellen. Die Dauer des Regenerationsbetriebs kann an einen approximierten oder gemessenen Regenerationsbedarf angepasst werden, wobei neben Umgebungsbedingungen und Betriebsdauerdaten auch die Feuchte eines Trocknungsmittels messtechnisch erfasst wird, und eine Einleitung oder Beendigung eines Regenerationsbetriebs bei einem Überschreiten oder Unterschreiten eines Grenzwertes für die Feuchtigkeit erfolgt.

Eine weitere derartige Vorrichtung ist auch aus der EP 0 199 948 A1 bekannt.

Vor diesem Hintergrund liegt der Erfindung die Aufgabe zugrunde, ein Verfahren zum Betrieb eines Druckluftsystems mit einer Lufttrocknungseinrichtung mit zwei Trocknungskartuschen anzugeben, das leistungsstark und energiesparend sowie korrosionsmindernd wirkt.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem Druckluftsystem eines Fahrzeugs, mit einer elektronisch gesteuerten Lufttrocknungseinrichtung, welche wenigstens zwei Trocknungskartuschen aufweist, durch eine dem aktuellen, individuellen Feuchtigkeitsgehalt der Kartuschen im Vergleich zueinander angepasste variable Steuerung der Förder- und Regenerationszeiträume ein leistungsstarker und dennoch kraftstoffsparender sowie korrosionsarmer Betrieb möglich ist.

Demnach geht die Erfindung aus von einem Verfahren zum Betrieb eines Druckluftsystems eines Fahrzeugs, mit einer elektronisch gesteuerten Lufttrocknungseinrichtung, welche wenigstens zwei Trocknungskartuschen aufweist, die im gegenseitigen Wechsel oder unabhängig voneinander in einem Förderbetrieb zur Trocknung von mittels eines Kompressors erzeugter Druckluft zur Versorgung des Druckluftsystems und in einem Regenerationsbetrieb zur Beseitigung von in den Trocknungskartuschen sich ansammelnder Feuchtigkeit betrieben werden, wobei ständig der Feuchtigkeitsgehalt der Trocknungskartuschen erfasst oder berechnet wird.

Zur Lösung der gestellten Aufgabe sieht die Erfindung zudem vor, dass die Förderzeiträume und die Regenerationszeiträume der Trocknungskartuschen mittels Steuerungsmaßnahmen in Abhängigkeit ihres jeweiligen aktuellen Feuchtigkeitsgehalts oder einer daraus abgeleiteten oder einer dazu äquivalenten Größe aufeinander abgestimmt werden, derart, dass diese Steuerungsmaßnahmen einem im Vergleich zueinander ungleichen Feuchtigkeitsgehalt der Trocknungskartuschen in Richtung zu einer Reduzierung des Feuchtigkeitsgehalts entgegenwirken.

Unter einem Förderbetrieb wird die Versorgung eines Druckluftsystems mit Druckluft verstanden, wobei der von einem Kompressor kommenden Druckluft in einer Lufttrocknungseinrichtung Feuchtigkeit entzogen wird. Unter einem Förderzeitraum wird ein jeweiliger Zeitraum verstanden, in dem eine Trocknungskartusche im Förderbetrieb erzeugte Druckluft entfeuchtet.

Unter einem Regenerationsbetrieb wird die Beseitigung durch Ausblasen und/oder Ausheizen von in Trocknungskartuschen aufgenommener und zumindest überwiegend in Form von zu Wasser kondensierter Feuchtigkeit verstanden, welche der durch den Kompressor angesaugten Umgebungsluft entzogen ist. Unter einem Regenerationszeitraum wird ein jeweiliger Zeitraum verstanden, in dem in einer Trocknungskartusche angesammelte Feuchtigkeit aus dieser entfernt wird.

Unter einem Feuchtigkeitsgehalt wird ein Maß für eine in einer Trocknungskartusche enthaltene Menge an gasförmigem und/oder flüssigem Wasser und/oder anderen Fluiden verstanden, welche der geförderten Druckluft entzogenen sind.

Unter einer Neubefüllung oder Erstbefüllung eines Druckluftsystems wird der Aufbau eines Systemdrucks bis mindestens zum Erreichen eines Mindesteinschaltdruckwerts, beispielsweise bei Inbetriebnahme des Druckluftsystems nach einem Motorstart, verstanden. Bei einem folgenden Abfall des Systemdrucks unter den Mindesteinschaltdruckwert soll sich, wenn das Druckluftsystem in Betrieb ist, der Förderbetrieb einschalten.

Bei dem Verfahren gemäß der Erfindung zum Betrieb eines Druckluftsystems eines Fahrzeugs mit einer elektronisch gesteuerten Zweikammer-Lufttrocknungseinrichtung mit zwei Trocknungskartuschen erfolgt mit Hilfe einer computerbasierten Steuerung eine dem jeweiligen Feuchtigkeitsgehalt angepasste und aufeinander abgestimmte Nutzung der beiden Trocknungskartuschen. Der Feuchtigkeitsgehalt der Kartuschen kann mit Hilfe einer vorhandenen Sensorik und/oder durch Berechnung mittels vorhandener relevanter Daten ermittelt werden. Um eine effiziente Nutzung beider Trocknungskartuschen zu erreichen, werden die Feuchtigkeitsgehalte der Kartuschen nicht jeweils für sich sondern im Zusammenhang betrachtet. Dadurch wird ein ungleicher Feuchtigkeitsgehalt der Kartuschen gemindert, der regelmäßig bei langen Förderphasen mit einer der Kartuschen entsteht, wie beispielsweise bei der Befüllung nach der jeweiligen Inbetriebnahme des Systems beim Starten des Fahrzeugs.

Insbesondere kann durch eine variable Ansteuerung der den Trocknungskartuschen zugeordneten Ventile die jeweils höher mit Wasser belastete der beiden Trocknungskartuschen durch verlängerte Regenerationszyklen schneller getrocknet werden und damit effektiver sowie effizienter regenerieren. Dadurch wird im Betriebsverlauf des Druckluftsystems im Ergebnis eine Kraftstoffeinsparung ermöglicht. Die Trocknungskartuschen werden durch den gegenüber einer gleichmäßigen Ansteuerung geringeren Feuchtigkeitsgehaltunterschied besser für nachfolgende relativ lange Förderzeiträume präpariert. Das Druckluftsystem selbst trocknet zudem besser ab, wodurch sich die Unempfindlichkeit und der gewünschte Schutz gegen Korrosion deutlich verbessern sowie die Vereisungs- und Einfriergefahr von Komponenten bei niedrigen Umgebungstemperaturen verringert. Insgesamt wird demnach die Leistungsfähigkeit der Lufttrocknungseinrichtung verbessert.

Das Verfahren kann mit geringem Aufwand in eine Software einer elektronisch gesteuerten Luftaufbereitung, E-APU (Electronic Air Processing Unit), wie beispielsweise der bekannten FuelGuard™ der Anmelderin, integriert werden.

Gemäß einer Weiterbildung des Verfahrens kann vorgesehen sein, dass bei einer jeweiligen Neubefüllung oder Erstbefüllung des Druckluftsystems keine Umschaltung zwischen den beiden Trocknungskartuschen, zumindest bis zum Erreichen eines Mindesteinschaltdruckwert, erfolgt.

Außerdem ist es vorteilhaft, wenn bei dem Verfahren zusätzlich vorgesehen ist, dass die Regenerationszeiträume der Trocknungskartuschen mittels eines Regenerationsfaktors an ihren aktuellen Feuchtigkeitsgehalt im Vergleich zueinander angepasst werden. Zur Bestimmung von Regenerationszeiträumen und/oder Regenerationsvolumina wird vorzugsweise das Verhältnis des Feuchtigkeitsgehalts der jeweils höher feuchtigkeitsbelasteten der beiden Trocknungskartuschen zu dem Feuchtigkeitsgehalt der jeweils geringer feuchtigkeitsbelasteten der beiden Trocknungskartuschen genutzt.

Hierzu kann vorgesehen sein, dass die Regenerationszeiträume der Trocknungskartuschen mittels eines Regenerationsfaktors an ihren aktuellen Feuchtigkeitsgehalt im Vergleich zueinander angepasst werden, wobei sich der Regenerationsfaktor aus der Gleichung (Gl.1) $\text{regFactor}_{\text{highIDU}} = \dfrac{\text{highIDU}}{\text{lowIDU}} \cdot 0{,}5$ mit den Randbedingungen

$$\left( 2 \le \frac{\text{highIDU}}{\text{lowIDU}} \le \left( \frac{\text{highIDU}}{\text{lowIDU}} \right)_{\text{max}} \right)$$ und (highIDU $\ge$ highIDU$_{\text{min}}$) ergibt. Hierbei bezeichnet highIDU den Feuchtigkeitsgehalt der jeweils höher feuchtigkeitsbelasteten der beiden Trocknungskartuschen und lowIDU den Feuchtigkeitsgehalt der jeweils geringer feuchtigkeitsbelasteten der beiden Trocknungskartuschen, wobei IDU der Wert eines Zählers ist, welcher den Feuchtigkeitsgehalt angibt.

Demnach wird ein Regenerationsfaktor mit dem Ziel genutzt, den Regenerationsbetrieb der stärker feuchtigkeitsbelasteten der beiden Kartuschen zu intensivieren. Durch den Regenerationsfaktor wird die Regeneration der betreffenden Kartusche stärker gewichtet und deren Regenerationszyklen verlängert. Dies hat zur Folge, dass der Feuchtigkeitsgehalt dieser Kartusche schneller abgebaut wird. Der Feuchtigkeitsgehalt der weniger belasteten Kartusche wird vorzugsweise unverändert abgebaut. Die Differenz der Feuchtigkeitsgehalte wird dementsprechend von Regenerationszyklus zu Regenerationszyklus kleiner und wesentlich schneller sowie effektiver gegenüber dem bisher genutzten, nicht gewichteten Regenerationsbetrieb abgebaut. Durch diese intelligente Steuerungsmaßnahme wird eine vergleichsweise schnelle Regeneration der Lufttrocknungseinrichtung ermöglicht. Bei einer herkömmlichen gleichmäßigen Ansteuerung beider Kartuschen würde sich hingegen der Feuchtigkeitsgehaltunterschied erst abbauen, nachdem die weniger belastete Kartusche nahezu vollständig getrocknet wäre.

Überraschenderweise hat sich für die Bestimmung eines besonders wirksamen Regenerationsfaktors die empirisch ermittelte Gleichung (Gl.1) $\text{regFactor}_{\text{highIDU}} = \dfrac{\text{highIDU}}{\text{lowIDU}} \cdot 0{,}5$ als vorteilhaft herausgestellt, wobei der Wertebereich des Regenerationsfaktors gemäß $2 \le \dfrac{\text{highIDU}}{\text{lowIDU}} \le \left( \dfrac{\text{highIDU}}{\text{lowIDU}} \right)_{\text{max}}$ begrenzt werden soll.

Als eine günstige Randbedingung hat sich hier eine Begrenzung des Feuchtigkeitsgehaltsverhältnisses der Kartuschen gemäß $\left( \dfrac{\text{highIDU}}{\text{lowIDU}} \right)_{\text{max}} = 8$ erwiesen, so dass sich ein maximaler Regenerationsfaktor von regFactor$_{\text{highIDU,max}}$ = 4 ergibt. Weiterhin soll der Regenerationsfaktor erst zur Anwendung kommen, wenn der Zählerwert highIDU des Feuchtigkeitsgehalts der höher belasteten der beiden Kartuschen einen Mindestwert highIDU$_{\text{min}}$ erreicht oder überschritten hat.

Außerdem kann vorgesehen sein, dass sich ein jeweiliger Regenerationszeitraum der höher feuchtigkeitsbelasteten der beiden Trocknungskartuschen durch die Multiplikation einer vorgegebenen oder vorab bestimmten Zeitbasis und/oder Mengenbasis mit einem berechneten Regenerationsfaktor ergibt.

Alternativ dazu kann vorgesehen sein, dass sich ein jeweiliger Regenerationszeitraum der niedriger feuchtigkeitsbelasteten der beiden Trocknungskartuschen durch die Division einer vorgegebenen oder vorab bestimmten Zeitbasis und/oder Mengenbasis mit einem berechneten Regenerationsfaktor ergibt.

Weiter kann vorgesehen sein, dass als eine Zeitbasis zur Bestimmung eines jeweiligen Regenerationszeitraums der höher feuchtigkeitsbelasteten der beiden Trocknungskartuschen ein vorgegebener Regenerationszeitraum der geringer feuchtigkeitsbelasteten der beiden Trocknungskartuschen verwendet wird.

Der Regenerationsfaktor wird demnach vorzugsweise auf eine Zeitbasis angewendet, welche einem Regenerationszeitraum der weniger belasteten Kartusche entspricht. Diese Zeitbasis kann fest vorgegeben sein. Sie kann jedoch auch variabel bestimmt werden. Weiterhin ist es möglich, zur Bestimmung einer Zeitbasis Parameter wie den Volumenstrom in Entlüftungsrichtung, die Druckluftfemperatur, die Luftfeuchtigkeit der Umgebungsluft, gegebenenfalls die Ausheiztemperatur etc. zu berücksichtigen.

Beim Umschalten zwischen den beiden Trocknungskartuschen wechselt der Druckluftstrom, welcher entfeuchtet werden soll, die Kartusche, so dass die jeweils andere Kartusche für den Regenerationsbetrieb nutzbar ist. An dieser Stelle sei angemerkt, dass in einer Steuerung auch die Möglichkeit eines kurzfristigen parallelen Betriebs beider Trocknungskartuschen im Förderbetrieb oder beider Trocknungskartuschen im Regenerationsbetrieb vorgesehen sein kann. Ebenso kann eine Ansteuerung möglich sein, bei der vorübergehend nur eine der beiden Kartuschen in einem Förderbetrieb oder Regenerationsbetrieb betrieben wird und die andere Kartusche funktional vom System getrennt ist.

Um eine effiziente und effektive Nutzung der Lufttrocknungseinrichtung in verschiedenen Betriebszuständen des Druckluftsystems und eines damit ausgestatteten Fahrzeugs sicherzustellen, können zur Steuerung des Umschaltens der Trocknungskartuschen Kriterien hinsichtlich des Systemdrucks, des Feuchtigkeitsgehalts und/oder des Fahrzustands betrachtet werden.

Bei der Aktivierung des Druckluftsystems werden zunächst in einem Förderbetrieb jeweils ein oder mehrere Druckluftbehälter des Druckluftsystems vom Kompressor mit Druckluft bis zu einem vorgegebenen Systemdruck oder Fülldruck befüllt, wobei eine der Trocknungskartuschen im Förderbetrieb durchströmt wird, um der vom Kompressor kommenden Luft Feuchtigkeit zu entziehen. Der Kompressor kann bei Erreichen eines vorgegebenen Abschaltdruckwerts abgeschaltet oder in einen Leerlauf geschaltet werden, und wird zweckmäßigerweise jeweils erneut eingeschaltet, wenn der Systemdruck unter den Abschaltdruckwert oder einen vorgegebenen Mindesteinschaltdruckwert abfällt.

Für die Ansteuerung zur Nutzung der Trocknungskartuschen im Förderbetrieb kann vorgesehen sein, dass während der Fahrt des Fahrzeugs eine Umschaltung zwischen den beiden Trocknungskartuschen erlaubt oder zumindest priorisiert wird, wenn der Systemdruck des Druckluftsystems einen Mindestfahrdruckwert erreicht oder überschreitet.

Demnach erfolgt eine Umschaltung der Trocknungskartuschen im Fahrbetrieb bevorzugt in einem schmalen Druckbereich relativ hoher Systemdrücke zwischen einem Mindestfahrdruckwert und einem Mindesteinschaltdruckwert beziehungsweise einem Abschaltdruckwert. Dadurch ist eine hohe Leistungsfähigkeit des Druckluftsystems im Fahrbetrieb jederzeit gewährleistet.

Außerdem kann vorgesehen sein, dass im Förderbetrieb während eines Stillstands des Fahrzeugs eine Umschaltung zwischen den beiden Trocknungskartuschen erst dann erlaubt wird, wenn der Systemdruck des Druckluftsystems einen Mindeststillstanddruckwert erreicht oder überschreitet.

Demnach wird ein vergleichsweise niedriger Mindestdruck festgelegt, bei dem im Fahrzeugstillstand bereits eine Umschaltung der Kartuschen erfolgen kann. Dies hat den Vorteil, dass auch bei einem sehr hohen Druckluftverbrauch und einem damit verbundenem niedrigen Systemdruck, wie er beispielsweise bei Spezialfahrzeugen vorkommen kann, zumindest im Fahrzeugstillstand eine effektive Lufttrocknung über die Kartusche mit der jeweils aktuell geringeren Wasserlast geschaltet werden kann.

Weiterhin kann vorgesehen sein, dass im Förderbetrieb eine Umschaltung zwischen den beiden Trocknungskartuschen in einem Systemdruckbereich, welcher zu niedrigen Systemdrücken hin durch den Mindeststillstanddruckwert und zu höheren Drücken hin durch den Mindestfahrdruckwert begrenzt ist, in Abhängigkeit einer vorgegebenen Feuchtigkeitsgehaltschwelle erfolgt, welche in diesem Druckbereich zu höheren Drücken hin stetig abfällt.

Demnach wird in einem vorgegebenen Systemdruckbereich eine variable Feuchtigkeitsgehaltschwelle als Umschaltkriterium eingeführt, mit einer Priorisierung einer Luftförderung gegenüber einer Kartuschenumschaltung, wobei die Förderpriorität zu niedrigeren Systemdrücken hin ansteigt. Dadurch reduziert sich der Druckluftverbrauch für Umschaltvorgänge und Regenerationsphasen zugunsten einer zuverlässigen Druckluftversorgung für die Verbraucher bei einem sehr hohen Luftverbrauch und gleichzeitig niedrigem Systemdruck. Beispielsweise kann die Feuchtigkeitsgehaltschwelle als eine Gerade mit einer stetigen Steigung zwischen dem Mindestfahrdruckwert und dem Mindeststillstanddruckwert definiert sein.

Zur weiteren Verdeutlichung der Erfindung ist der Beschreibung eine Zeichnung eines Ausführungsbeispiels beigefügt. In dieser zeigt

Fig. 1 ein Balkendiagramm zur Darstellung der Entwicklung des Feuchtigkeitsgehalts zweier Trocknungskartuschen einer Lufttrocknungseinrichtung eines Druckluftsystems bei einem Verfahren nach dem Stand der Technik,

Fig. 2 ein Balkendiagramm zur Darstellung der Entwicklung des Feuchtigkeitsgehalts zweier Trocknungskartuschen einer Lufttrocknungseinrichtung eines Druckluftsystems bei einem Verfahren gemäß der Erfindung, und

Fig. 3 ein Diagramm zur Darstellung der Steuerung der Umschaltung zwischen zwei Trocknungskartuschen bei einem Verfahren gemäß der Erfindung.

Ein nicht dargestelltes Druckluftsystem eines Fahrzeugs weist im Wesentlichen einen Kompressor, eine Lufttrocknungseinrichtung mit zwei Trocknungskartuschen, eine Ventileinrichtung mit elektromagnetisch betätigbaren Ventilen sowie eine elektronische Steuerungseinrichtung zur Steuerung dieser Komponenten auf. Solche Systeme sind allgemein bekannt. Auf eine nähere Beschreibung des Aufbaus und der Funktionsweise eines solchen Druckluftsystems kann daher hier verzichtet werden.

Der Kompressor erzeugt Druckluft für an einen Arbeitsanschluss anschließbare Verbraucher, wie beispielsweise eine pneumatische Bremsanlage eines Nutzfahrzeugs. Eine solche Bremsanlage weist einen oder mehrere Druckluftvorratsbehälter auf, welche von dem Kompressor mit Druckluft gespeist werden. Die Lufttrocknungseinrichtung entzieht der verdichteten Luft Feuchtigkeit, welche sich dort als Wasser ansammelt und regelmäßig über ein Entlüftungsventil in die Umgebung ausgeblasen wird. Von Zeit zu Zeit werden zu diesem Zweck Trocknungskartuschen der Lufttrocknungseinrichtung zur Regeneration, zum Beispiel zur Entfernung des kondensierten Wassers, in einen Regenerationsbetrieb geschaltet. Um die Druckluftaufbereitung möglichst wenig zu unterbrechen oder zu verringern, können die beiden Kartuschen mittels der Steuerungseinrichtung wechselweise in einem Förderbetrieb zur Druckluftaufbereitung und in einem Regenerationsbetrieb zum Entfeuchten derselben betrieben werden. Im Regenerationsbetrieb wird vorzugsweise trockene Druckluft aus dem System entnommen und in umgekehrter Richtung zur Förderrichtung durch die jeweils zu regenerierende Kartusche geleitet, um das sich darin angesammelte Wasser zu entsorgen.

Im Folgenden wird die Wirkungsweise eines Verfahrens zum Betrieb eines solchen Druckluftsystems an einem im Betrieb häufig vorkommenden Szenario erläutert, wobei die in den Figuren angegebenen Zahlenwerte lediglich als plausible Zahlenbeispiele zu verstehen sind.

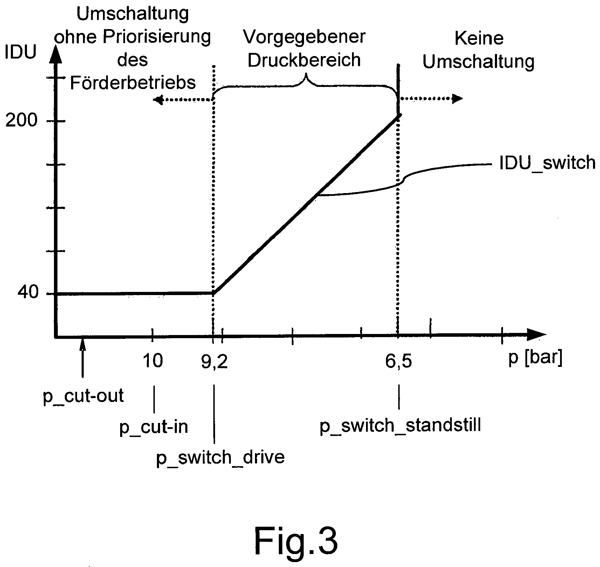

Demnach erfolgt beim Starten des Fahrzeugs zunächst eine Erstbefüllung des Druckluftsystems. Möglich ist es auch, dass nach einem sehr schnellen und hohen Luftverbrauch eine Neubefüllung notwendig ist. Hierbei verdichtet und fördert der Kompressor aus der Umgebung angesaugte Luft solange, bis ein vorgegebener Abschaltdruck erreicht ist. Der Kompressor wird bei Erreichen des Abschaltdruckwerts p_cut-out abgeschaltet oder in einen Leerlauf geschaltet. Der Kompressor wird zweckmäßigerweise jeweils erneut eingeschaltet, wenn der Systemdruck unter den Abschaltdruckwert p_cut-out oder einen vorgegebenen Mindesteinschaltdruckwert p_cut-in abfällt. In einem Zahlenbeispiel gemäß Fig. 3 beträgt dieser Mindesteinschaltdruckwert p_cut-in = 10 bar.

Die mit Hilfe des Kompressors verdichtete Luft durchströmt eine erste der beiden Trocknungskartuschen, wobei die Luftfeuchtigkeit in der Trocknungskartusche beziehungsweise in einem dort angeordneten Trocknungsmittel aufgenommen wird. Während der Erstbefüllung erfolgt keine Umschaltung zwischen den Kartuschen, wobei laufend der Feuchtigkeitsgehalt der Kartuschen gemessen oder berechnet wird. Der Feuchtigkeitsgehalt wird als eine Rechen- und Steuerungsgröße in einen Zählerwert IDU umgewandelt und in willkürlichen Einheiten angegeben. Da nur die Höhe, nicht aber die Ermittlungsmethode des Feuchtigkeitsgehalts selbst für die Erfindung von Bedeutung ist, wird an dieser Stelle darauf nicht weiter eingegangen.

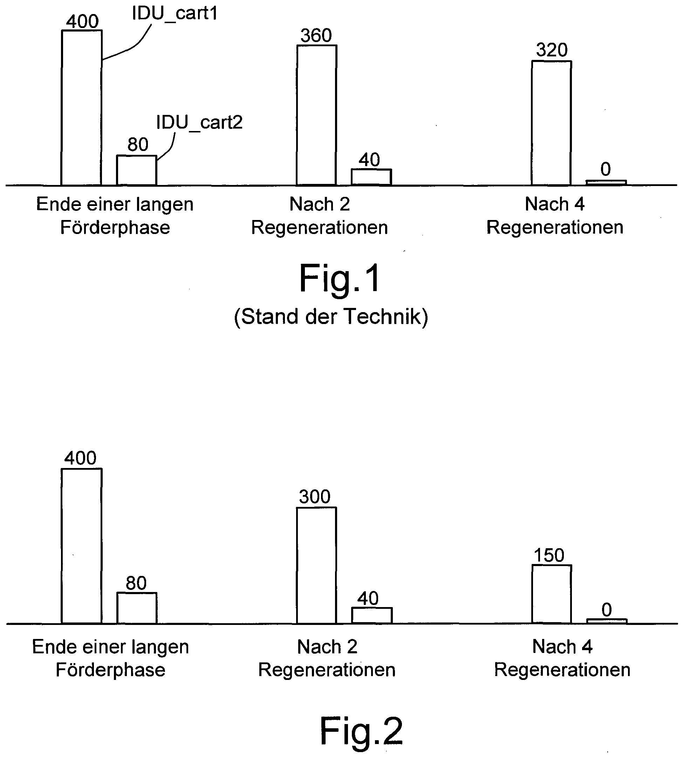

Wie die Figuren 1 und 2 zeigen, beträgt der Zählerwert des Feuchtigkeitszählers IDU am Ende einer zeitlich relativ langen Druckluftbefüllung in der zur Entfeuchtung dieser Befüllung verwendeten ersten Kartusche IDU_cart1 = highIDU = 400 Zählereinheiten. Anschließend kann die erste Kartusche in den Regenerationsbetrieb geschaltet werden. Die zweite Kartusche stünde dann zur Lufttrocknung bei der nächsten, wahrscheinlich kürzeren Förderphase zur Verfügung. In der zweiten Kartusche möge sich ein Feuchtigkeitsgehalt mit einem Zählerwert von IDU-cart2 = lowIDU = 80 Zählereinheiten befinden. Es besteht somit eine relativ große Ungleichheit des Feuchtigkeitsgehalts der beiden Kartuschen.

Bei einem herkömmlichen Verfahren gemäß Fig. 1 würde bei jedem der folgenden Regenerationszyklen der Feuchtigkeitsgehalt beider Kartuschen gleichmäßig um 20 IDU-Einheiten abgebaut. Wie aus der zugehörigen Tabelle 1 entnehmbar ist, würde im weiteren Betrieb des Druckluftsystems die Feuchtigkeitsdifferenz $\Delta$ IDU = 320 bei den folgenden Regenerationszyklen zunächst nicht abgebaut. Dies verursacht eine unnötig hohe Gesamtluftfeuchtigkeit in dem Druckluftsystem. Die Trocknungsleistung sinkt. Der Kraftstoff beziehungsweise die Energie zur Lufttrocknung wird ineffizient genutzt, wenn die ohnehin schon wasserlastige erste Kartusche für eine weitere lange Förderphase eingesetzt wird.

Tabelle1

| regCycle | regFactor_highIDU | highIDU | lowIDU | $\Delta$IDU |
|---|---|---|---|---|
| 0 | | 400 | 80 | 320 |
| 1 | - | 380 | 60 | 320 |
| 2 | - | 360 | 40 | 320 |
| 3 | - | 340 | 20 | 320 |
| 4 | - | 320 | 0 | 320 |

Dies wird durch die Nutzung des Verfahrens nach der Erfindung gemäß Fig. 2 verbessert. Wie aus der zugehörigen Tabelle 2 in Verbindung mit Fig. 2 entnehmbar ist, werden die Regenerationszyklen der höher feuchtigkeitsbelasteten ersten Kartusche mit einem Regenerationsfaktor $regFactor_{highIDU} = \dfrac{highIDU}{lowIDU} \cdot 0,5$ gewichtet, wobei dieser Faktor in dem gezeigten Beispiel alle zwei Zyklen aus dem aktuellen Zählerwertverhältnis neu bestimmt wird. Die Kartusche wird folglich jeweils 2,5-fach beziehungsweise 3,75-fach regeneriert. Die Feuchtigkeitsdifferenz wird dementsprechend schneller abgebaut. Beide Kartuschen sind für nachfolgende Einsätze vorbereitet.

Tabelle 2

| regCycle | regFactor_highIDU | highIDU | lowIDU | $\Delta$IDU |
|---|---|---|---|---|
| 0 | | 400 | 80 | 320 |
| 1 | 2,5 x 20 | 350 | 60 | 290 |
| 2 | 2,5 x 20 | 300 | 40 | 260 |
| 3 | 3,75 x 20 | 225 | 20 | 205 |
| 4 | 3,75 x 20 | 150 | 0 | 150 |

Fig. 3 zeigt ein Diagramm mit einer an den Feuchtigkeitsgehalt angepassten variablen Feuchtigkeitsgehaltumschaltschwelle IDU_switch zur Umschaltung zwischen Förderbetrieb und Regenerationsbetrieb der Kartuschen in Abhängigkeit des Systemdrucks. Demnach steigt in einem vorgegebenen Druckbereich (adapted IDU threshold), in dem angegebenen Zahlenbeispiel zwischen 9,2 bar und 6,5 bar, die Feuchtigkeitsgehaltumschaltschwelle als Umschaltkriterium stetig an. Dies bedeutet, dass in Richtung kleinerer Drücke dem Förderbetrieb eine zunehmende Priorität gegenüber einer Umschaltung zu einem Regenerationsbetrieb eingeräumt wird. Dies ist insbesondere in Phasen eines sehr hohen Druckluftverbrauchs von Vorteil, um möglichst wenig Druckluft für die Regeneration dem Druckluftsystem zu entziehen.

Der betrachtete Druckbereich wird von einem unteren Wert, dem Mindeststillstanddruckwert p_switch-standstill und einem oberen Wert, dem Mindestfahrdruckwert p_switch_drive begrenzt. Der Mindeststillstanddruckwert p_switch-standstill ist derjenige Druckwert, ab dem die Kartuschen überhaupt erst umgeschaltet werden. Eine Umschaltung nach dem adaptierten Schwellwert IDU-switch erfolgt daher nur oberhalb des Mindeststillstanddruckwerts p-switch-standstill. Unterhalb des Mindeststillstanddruckwerts p-switch-standstill erfolgt demnach keine Umschaltung (no-switching), und oberhalb des Mindestfahrdruckwerts p_switch_drive erfolgt eine Umschaltung ohne Priorisierung des Förderbetriebs (normal-switching).

Bezugszeichenliste (Bestandteil der Beschreibung)

IDU     Feuchtigkeitsgehaltzähler
IDU_cart1   Feuchtigkeitsgehalt erste Kartusche
IDU_cart2   Feuchtigkeitsgehalt zweite Kartusche
IDU_switch   Feuchtigkeitsgehaltumschaltschwelle
p      Systemdruck
p_cut-in    Mindesteinschaltdruckwert
p_cut-out    Abschaltdruckwert
p_switch_drive  Mindestfahrdruckwert
p_switch_standstill Mindeststillstanddruckwert

**Patentansprüche**

1. Verfahren zum Betrieb eines Druckluftsystems eines Fahrzeugs, mit einer elektronisch gesteuerten Lufttrocknungseinrichtung, welche wenigstens zwei Trocknungskartuschen aufweist, die im gegenseitigen Wechsel oder unabhängig voneinander in einem Förderbetrieb zur Trocknung von mittels eines Kompressors erzeugter Druckluft zur Versorgung des Druckluftsystems und in einem Regenerationsbetrieb zur Beseitigung von in den Trocknungskartuschen sich ansammelnder Feuchtigkeit betrieben werden, wobei ständig der Feuchtigkeitsgehalt der Trocknungskartuschen erfasst oder berechnet wird, **dadurch gekennzeichnet, dass** die Förderzeiträume und die Regenerationszeiträume der Trocknungskartuschen mittels Steuerungsmaßnahmen in Abhängigkeit ihres jeweiligen aktuellen Feuchtigkeitsgehalts oder einer daraus abgeleiteten oder einer dazu äquivalenten Größe aufeinander abgestimmt werden, derart, dass diese Steuerungsmaßnahmen einem im Vergleich zueinander ungleichen Feuchtigkeitsgehalt der Trocknungskartuschen in Richtung zu einer Reduzierung des Feuchtigkeitsgehalts entgegenwirken.

2.  Verfahren nach Anspruch 1, **dadurch gekennzeichnet, dass** bei einer jeweiligen Neubefüllung oder Erstbefüllung des Druckluftsystems keine Umschaltung zwischen den beiden Trocknungskartuschen, zumindest bis zum Erreichen eines Mindesteinschaltdruckwerts (p_cut-in), erfolgt.

3.  Verfahren nach Anspruch 1 oder 2, **dadurch gekennzeichnet, dass** die Regenerationszeiträume der Trocknungskartuschen mittels eines Regenerationsfaktors an ihren aktuellen Feuchtigkeitsgehalt im Vergleich zueinander angepasst werden.

4.  Verfahren nach Anspruch 3, **dadurch gekennzeichnet, dass** zur Bestimmung von Regenerationszeiträumen und/oder Regenerationsvolumina das Verhältnis des Feuchtigkeitsgehalts (highIDU) der jeweils höher feuchtigkeitsbelasteten der beiden Trocknungskartuschen zu dem Feuchtigkeitsgehalt (lowIDU) der jeweils geringer feuchtigkeitsbelasteten der beiden Trocknungskartuschen genutzt wird.

5.  Verfahren nach den Ansprüchen 3 und 4, **dadurch gekennzeichnet, dass** sich der Regenerationsfaktor aus der

Gleichung (Gl.1) $\mathrm{regFactor_{highIDU}} = \dfrac{\mathrm{highIDU}}{\mathrm{lowIDU}} \cdot 0{,}5$ mit den Randbedingungen

$$\left(2 \le \frac{\mathrm{highIDU}}{\mathrm{lowIDU}} \le \left(\frac{\mathrm{highIDU}}{\mathrm{lowIDU}}\right)_{\max}\right), \left(\mathrm{highIDU} \ge \mathrm{highIDU_{min}}\right)$$

ergibt, mit dem Feuchtigkeitsgehalt (highIDU) der jeweils höher feuchtigkeitsbelasteten der beiden Trocknungskartuschen und dem Feuchtigkeitsgehalt (lowIDU) der jeweils geringer feuchtigkeitsbelasteten der beiden Trocknungskartuschen, wobei IDU der Wert eines Zählers ist, welcher den Feuchtigkeitsgehalt angibt.

6.  Verfahren nach einem der Ansprüche 1 bis 5, **dadurch gekennzeichnet, dass** sich ein jeweiliger Regenerationszeitraum der höher feuchtigkeitsbelasteten der beiden Trocknungskartuschen durch die Multiplikation einer vorgegebenen oder vorab bestimmten Zeitbasis und/oder Mengenbasis mit einem berechneten Regenerationsfaktor ergibt.

7.  Verfahren nach einem der Ansprüche 1 bis 5, **dadurch gekennzeichnet, dass** sich ein jeweiliger Regenerationszeitraum der niedriger feuchtigkeitsbelasteten der beiden Trocknungskartuschen durch die Division einer vorgegebenen oder vorab bestimmten Zeitbasis und/oder Mengenbasis mit einem berechneten Regenerationsfaktor ergibt.

8.  Verfahren nach Anspruch 6 oder 7, **dadurch gekennzeichnet, dass** als eine Zeitbasis zur Bestimmung eines Regenerationszeitraums der höher feuchtigkeitsbelasteten der beiden Trocknungskartuschen ein vorgegebener Regenerationszeitraum der geringer feuchtigkeitsbelasteten der beiden Trocknungskartuschen verwendet wird.

9.  Verfahren nach Anspruch 6 oder 7, **dadurch gekennzeichnet, dass** als eine Zeitbasis zur Bestimmung eines Regenerationszeitraums der niedriger feuchtigkeitsbelasteten der beiden Trocknungskartuschen ein vorgegebener Regenerationszeitraum der höher feuchtigkeitsbelasteten der beiden Trocknungskartuschen verwendet wird.

10. Verfahren nach einem der Ansprüche 1 bis 9, **dadurch gekennzeichnet, dass** im Förderbetrieb während der Fahrt des Fahrzeugs eine Umschaltung zwischen den beiden Trocknungskartuschen erlaubt oder zumindest priorisiert wird, wenn der Systemdruck des Druckluftsystems einen Mindestfahrdruckwert (p_switch_drive) erreicht oder überschreitet.

11. Verfahren nach einem der Ansprüche 1 bis 10, **dadurch gekennzeichnet, dass** im Förderbetrieb während eines Stillstands des Fahrzeugs eine Umschaltung zwischen den beiden Trocknungskartuschen erst dann erlaubt wird, wenn der Systemdruck des Druckluftsystems einen Mindeststillstanddruckwert (p_switch_standstill) erreicht oder überschreitet.

**12.** Verfahren nach einem der Ansprüche 1 bis 11, **dadurch gekennzeichnet, dass** im Förderbetrieb eine Umschaltung zwischen den beiden Trocknungskartuschen in einem Systemdruckbereich, welcher zu niedrigen Systemdrücken hin durch den Mindeststillstanddruckwert (p_switch_standstill) und zu höheren Drücken hin durch den Mindestfahrdruckwert (p_switch_drive) begrenzt ist, in Abhängigkeit von einem vorgegebenen Feuchtigkeitsgehaltschwelle (IDU_switch) erfolgt, welche in diesem Druckbereich zu höheren Drücken hin stetig abfällt.

**Claims**

**1.** Method for operating a compressed air system of a vehicle, having an electronically controlled airdrying device which has at least two drying cartridges which are operated alternatively or independently of one another in a feed mode for drying compressed air, generated by means of a compressor, for supplying the compressed air system, and in a regeneration mode for eliminating moisture which has collected in the drying cartridges, wherein the moisture content of the drying cartridges is continuously detected or calculated, **characterized in that** the feed time periods and the regeneration time periods of the drying cartridges are matched to one another by means of control measures as a function of their respective current moisture content or a variable which is derived therefrom or is equivalent thereto, in such a way that these control measures counteract unequal moisture contents of the drying cartridges compared to one another in the direction of reducing the moisture content.

**2.** Method according to Claim 1, **characterized in that**
when the compressed air system is respectively refilled or filled for the first time, switching over does not occur between the two drying cartridges, at least until a minimum switch-on value (p_cut-in) is achieved.

**3.** Method according to Claim 1 or 2, **characterized in
that** the regeneration time periods of the drying cartridges are adapted to their current moisture content in comparison with one another by means of a regeneration factor.

**4.** Method according to Claim 3, **characterized in that**
the ratio of the moisture content (highIDU) of that one of the two drying cartridges which respectively has the higher moisture loading with respect to the moisture content (lowIDU) of that one of the two drying cartridges which respectively has the lower moisture loading is used for the determination of regeneration time periods and/or regeneration volumes.

**5.** Method according to Claims 3 and 4, **characterized in that** the regeneration factor is obtained from the equation (equa. 1)

$$regFactor_{highIDU} = \frac{highIDU}{lowIDU} \cdot 0{,}5$$

with the peripheral conditions

$$\left( 2 \le \frac{highIDU}{lowIDU} \le \left( \frac{highIDU}{lowIDU} \right)_{max} \right), \left( highIDU \ge highIDU_{min} \right),$$

with the moisture content (highIDU) of that one of the two drying cartridges which respectively has the higher moisture loading and the moisture content (lowIDU) of that one of the two drying cartridges which respectively has the lower moisture loading, wherein IDU is the value of a counter which indicates the moisture content.

**6.** Method according to one of Claims 1 to 5,
**characterized in that** a respective regeneration time period of that one of the two drying cartridges which has the higher moisture loading is obtained by multiplying a predefined or previously determined time base and/or quantity base by a calculated regeneration factor.

**7.** Method according to one of Claims 1 to 5,
**characterized in that** a respective regeneration time period of that one of the two drying cartridges which has the lower moisture loading is obtained by dividing a predefined or previously defined time base and/or quantity base by a calculated regeneration factor.

8. Method according to Claim 6 or 7, **characterized in that** a predefined regeneration time period of that one of the two drying cartridges which has the lower moisture loading is used as a time base for the determination of a regeneration time period of that one of the two drying cartridges which has the higher moisture loading.

9. Method according to Claim 6 or 7, **characterized in that** a predefined regeneration time period of that one of the two drying cartridges which has the higher moisture loading is used as a time base for the determination of a regeneration time period of that one of the two drying cartridges which has a lower moisture loading.

10. Method according to one of Claims 1 to 9, **characterized in that** in the feed mode while the vehicle is travelling, switching over between the two drying cartridges is permitted or at least prioritized if the system pressure of the compressed air system reaches or exceeds a minimum drive pressure value (p_switch_drive).

11. Method according to one of Claims 1 to 10, **characterized in that** in the feed mode during a stationary state of the vehicle, switching over between the two drying cartridges is permitted only if the system pressure of the compressed air system reaches or exceeds a minimum standstill pressure value (p_switch_standstill).

12. Method according to one of Claims 1 to 11, **characterized in that** in the feed mode, switching over between the two drying cartridges takes place in a system pressure range which is limited in the direction of low system pressures by the minimum standstill pressure value (p_switch_standstill) and in the direction of relatively high pressures by the minimum drive pressure value (p_switch_drive) as a function of a predefined moisture content threshold (IDU_switch) which drops constantly towards relatively high pressures in this pressure range.

**Revendications**

1. Procédé de conduite d'un système d'air comprimé pour véhicule automobile qui présente un dispositif de séchage d'air à commande électronique qui présente au moins deux cartouches de séchage utilisées en alternance ou indépendamment l'une de l'autre dans un fonctionnement de refoulement pour sécher de l'air comprimé délivré par un compresseur en vue d'alimenter le système d'air comprimé et dans un fonctionnement en régénération qui élimine l'humidité qui s'est rassemblée dans les cartouches de séchage, la teneur en humidité des cartouches de séchage étant saisie ou calculée en permanence, **caractérisé en ce que** les durées de refoulement et les durées de régénération des cartouches de séchage sont accordées mutuellement au moyen de dispositions de commande en fonction de leur teneur actuelle en humidité ou d'une grandeur qui en est dérivée ou en est équivalente, de telle sorte que ces dispositions de commande s'opposent à des différences de teneur en humidité dans les cartouches de séchage dans le sens d'une réduction de la teneur en humidité.

2. Procédé selon la revendication 1, **caractérisé en ce que** lors d'un nouveau remplissage ou du premier remplissage du système d'air comprimé, aucune commutation entre les deux cartouches de séchage n'a lieu au moins jusqu'à ce qu'une valeur minimale de branchement de pression (p_cut-in) soit atteinte.

3. Procédé selon les revendications 1 ou 2, **caractérisé en ce que** les durées de régénération des cartouches de séchage sont adaptées l'une à l'autre en termes de leur teneur en humidité au moyen d'un facteur de régénération.

4. Procédé selon la revendication 3, **caractérisé en ce que** pour déterminer les durées de régénération et/ou les volumes de régénération, le rapport entre la teneur en humidité (highIDU) de celle des deux cartouches de séchage qui est la plus chargée en humidité et la teneur en humidité (lowIDU) de celle des deux cartouches de séchage qui est la moins chargée en humidité est utilisé.

**5.** Procédé selon les revendications 3 et 4, **caractérisé en ce que** le facteur de régénération résulte de l'équation (GI.1)

$$\text{regFactor}_{\text{highIDU}} = \frac{\text{highIDU}}{\text{lowIDU}} \cdot 0{,}5 \quad \text{avec les conditions aux limites}$$

$$\left( 2 \leq \frac{\text{highIDU}}{\text{lowIDU}} \leq \left( \frac{\text{highIDU}}{\text{lowIDU}} \right)_{\text{max}} \right), \ \left( \text{highIDU} \geq \text{highIDU}_{\text{min}} \right)$$

avec la teneur en humidité (highIDU) de celle des deux cartouches de séchage qui est la plus chargée en humidité et la teneur en humidité (lowIDU) de celle des deux cartouches de séchage qui est la moins chargée en humidité, l'IDU étant la valeur d'un compteur qui indique la teneur en humidité.

**6.** Procédé selon l'une des revendications 1 à 5, **caractérisé en ce qu'**une durée de régénération de celle des deux cartouches de séchage qui est la plus chargée en humidité s'obtient par multiplication d'une base de temps prédéterminée ou définie préalablement et/ou d'une base de quantité, avec un facteur de régénération calculé.

**7.** Procédé selon l'une des revendications 1 à 5, **caractérisé en ce qu'**une durée de régénération de celle des deux cartouches de séchage qui est la moins chargée en humidité résulte de la division d'une base de temps prédéterminée ou définie préalablement et/ou d'une base de quantité avec un facteur de régénération calculé.

**8.** Procédé selon les revendications 6 ou 7, **caractérisé en ce que** comme base de temps pour la détermination de la durée de régénération de celle des deux cartouches de séchage qui est la plus chargée en humidité, une durée prédéterminée de régénération de celle des deux cartouches de séchage qui est la moins chargée en humidité est utilisée.

**9.** Procédé selon les revendications 6 ou 7, **caractérisé en ce que** comme base de temps pour la détermination de la durée de régénération de celle des deux cartouches de séchage qui est la moins chargée en humidité, une durée prédéterminée de régénération de celle des deux cartouches de séchage qui est la plus chargée en humidité est utilisée.

**10.** Procédé selon l'une des revendications 1 à 9, **caractérisé en ce qu'**en fonctionnement de refoulement, le véhicule circulant, une commutation entre les deux cartouches de séchage est permise ou au moins rendue prioritaire si la pression du système d'air comprimé atteint une valeur minimale de pression en circulation (p_switch_drive) ou la dépasse.

**11.** Procédé selon l'une des revendications 1 à 10, **caractérisé en ce qu'**en fonctionnement de refoulement, pendant un arrêt du véhicule, une commutation entre les deux cartouches de séchage n'est permise que si la pression du système d'air comprimé atteint ou dépasse une valeur de pression minimale à l'arrêt (p_switch_standstill).

**12.** Procédé selon l'une des revendications 1 à 11, **caractérisé en ce qu'**en fonctionnement de refoulement, une commutation entre les deux cartouches de séchage a lieu dans une plage de pression du système qui est limitée en direction des basses pressions du système par la valeur de pression minimale à l'arrêt (p-_switch_standstill) et en direction des hautes pressions par la valeur minimale de pression en roulage (p_switch_drive), en fonction d'un seuil prédéterminé de teneur en humidité (IDU_switch) qui diminue en permanence en direction des pressions plus élevées dans cette plage de pression.

## Fig.1
### (Stand der Technik)

## Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3533893 C2
- DE 102010031306 A1

- EP 0199948 A1